# EUROPÄISCHE PATENTSCHRIFT

(11) **EP 4 155 227 B1**
(45) Veröffentlichungstag und Bekanntmachung des Hinweises auf die Patenterteilung: **23.07.2025**
(21) Anmeldenummer: 21306320.9
(22) Anmeldetag: 24.09.2021
(51) Int. Cl.: B65D 63/16, H02G 3/32, F16L 3/04, F16L 3/233

(54) **KABELBINDER, BEFESTIGUNGSGARNITUR UND VERFAHREN ZUR MONTAGE DES KABELBINDERS**
CABLE TIE, FIXING SET AND METHOD FOR MOUNTING THE CABLE TIE
ATTACHE DE CÂBLE, GARNITURE DE FIXATION ET PROCÉDÉ DE MONTAGE DE L'ATTACHE DE CÂBLE

(43) Veröffentlichungstag der Anmeldung: 29.03.2023
(73) Patentinhaber: Nexans, 92400 Courbevoie (FR)
(72) Erfinder: LINDNER, Gerhard, 92685 FLOSS (DE)
(74) Vertreter: Ipsilon

(56) Entgegenhaltungen:
- DE-U1- 202004 017 224
- US-A- 5 970 585
- US-A1- 2020 224 797
- US-B2- 10 337 541

## Beschreibung

### Gebiet

Die Erfindung betrifft einen einfach montierbaren Kabelbinder und eine Montagegarnitur mit einem solchen Kabelbinder. Außerdem betrifft die Erfindung ein Verfahren zur Herstellung des Kabelbinders.

### Hintergrund

Kabelbinder werden bei der Produktion von zahlreichen Produkten eingesetzt. Eine typische Anwendung ist das Bündeln von einzelnen Leitungen zu einem Kabelstrang und/oder die Befestigung von Leitungen und Kabeln an einem anderen Bauteil in einem Produkt. Diese Art der Verwendung hat den Kabelbindern ihren Namen gegeben, aber Kabelbinder werden häufig auch zur Befestigung von Schläuchen oder ähnlichem eingesetzt. Ihren Erfolg in der Produktion verdanken Kabelbinder Ihrer einfachen, aber wirksamen Funktionsweise: Sie bestehen in den meisten Fällen aus einem biegsamen Kunststoffstreifen an dessen Ende sich ein Kopf oder Schloss mit einer Öffnung befindet. Der Streifen ist mit einer Verzahnung versehen und der Kopf ist mit einer schräg gestellten Rastzunge ausgestattet, die in die Verzahnung eingreift. Die schräg gestellte Rastzunge wird beim Einstecken des Kunststoffstreifens quer zu ihrer Längserstreckung ausgelenkt und rastet dabei nacheinander in Vertiefungen der Verzahnung ein. Ein nachfolgendes Herausziehen des Streifens aus dem Kopf ist aber nicht möglich, weil dabei in die Rastzunge eine Kraft entlang ihrer Längserstreckung eingeleitet wird. Die Rastzunge ist so ausgebildet, dass diese Kraft in den Kopf eingeleitet wird, ohne dass die Rastzunge sich verformt. Im Ergebnis führt das dazu, dass das Herausziehen des Streifens aus dem Kopf blockiert ist.

Aus dem Aufbau und der Funktion von bekannten Kabelbinder ergibt sich zwangsläufig, dass zur Befestigung eines Objektes an einem anderen Bauteil sowohl um das Objekt als auch um das andere Bauteil herumgeschlungen werden muss. In manchen Einbausituationen kann das schwierig oder sogar vollkommen unmöglich sein. Darüber hinaus hängt die Spannkraft, mit der der Kabelbinder das Objekt an dem anderen Bauteil festhält, in 1. Linie von der Kraft ab, mit der ein Werker den Streifen in den Kopf des Kabelbinders hineinzieht. Es liegt auf der Hand, dass es hierbei individuelle Unterschiede gibt, die sich nachteilig auf eine einheitliche Fertigungsqualität auswirken können. Dem kann nur durch Verwendung eines speziellen Werkzeugs entgegengewirkt werden.

Die US 10,337,541 B2 zeigt einen Kabelbinder, der dazu geeignet ist, um ein Element an einem Rohr zu befestigen. Der Kabelbinder weist einen dehnbaren elastischen Abschnitt auf, der sich zusammenzieht, wenn das Rohr schrumpft und so den Kabelbinder gespannt hält. Der Kabelbinder weist ein Band mit einem verzahnten Abschnitt auf.

Die US 2020/0224797 A1 offenbart einen weiteren Kabelbinder, der ganz ähnlich wie der Kabelbinder aus der US 10,337,541 B2 aufgebaut ist und ebenfalls einen elastischen Abschnitt aufweist. Der Kabelbinder umfasst zwei Rastköpfe, die jeweils ein mit einer Verzahnung versehenes Band aufnehmen.

Die DE 20 2004 017 224 U1 betrifft einen Kabelbinder mit zwei Rastköpfen, die für die Aufnahme von einem Band eingerichtet sind. In den Rastköpfen sind Sperrelemente vorgesehen, die mit einem Profil in dem Band zusammenwirken.

Die US 5 970 585 betrifft eine Schnalle, die mit einer Atemschutzmaske verwendet werden kann. Die Schnalle 14 besteht aus zwei Schnallenteilen 16 und 18, die jeweils am Ende von zwei Gurtteilen angeordnet sind. Die Schnallenteile 16, 18 haben Flügelteile 22 und Flanschteile 24. Die Schnalle 14 wird durch Verschieben der Flügelteile 22 in die Flanschteile 24 geschlossen.

Hiervon ausgehend hat die vorliegende Erfindung die Aufgabe, einen Kabelbinder zu schaffen, um eines oder mehrere der eingangs genannten Probleme zu überwinden oder zumindest zu verbessern.

### Beschreibung der Erfindung

Zur Lösung dieser Aufgabe schlägt die Erfindung nach einem ersten Aspekt einen Kabelbinder mit einem Band und einer in dem Band integrierten Spannvorrichtung vor, die das Band in einen ersten und einen zweiten Bereich teilt, die jeweils einen verzahnten Abschnitt aufweisen. Die Spannvorrichtung ist verschwenkbar ausgebildet und umfasst einen Rastkopf und zwei Spannhaken. Der Rastkopf umfasst zwei federnde Laschen, von denen eine mit einem Rastvorsprung versehen ist. Der Rastkopf fixiert die einmal gespannte Spannvorrichtung in der gespannten Stellung, sodass die Spannvorrichtung sich nicht mehr von allein lösen kann. Die beiden federnden Laschen sorgen dafür, dass der Rasthaken elastisch verformbar ist und dadurch in eine entsprechende Öffnung in dem ersten Band einführbar ist und dort verrastet. Der erste und der zweite Bereich des Bandes werden im folgenden auch als erstes und zweites Band bezeichnet.

Der erfindungsgemäße Kabelbinder hat den Vorteil, dass der Kabelbinder selbst zur Umschlaufung nicht vormontiert sein muss. Ein Kabelkanal oder ein Bauteil, an dem ein Objekt wie zum Beispiel ein Kabelbaum befestigt werden soll, können in der Montageposition verbleiben, weil beide Enden des Kabelbinders von einer Seite her in Kabelschlösser einsteckbar sind. Für die Montage des Kabelbinders sind keine Werkzeuge erforderlich.

Die freien Enden des Kabelbinders lassen sich in Kabelspannschlösser einstecken, wodurch ein Objekt an einem Bauteil befestigt werden kann, ohne dass der Kabelbinder um das Bauteil und das Objekt zunächst in einer Schlaufe herumgelegt werden muss. Es gibt nämlich Einbausituationen oder fertigungbedingte Prozesse, in denen es sehr schwierig ist, eine solche Schlaufe überhaupt zu bilden. Solche schwierigen, weil beengten Einbausituationen sind beispielsweise im Kraftfahrzeugbau häufig anzutreffen. Mit der Spannvorrichtung wird das Kabelband gespannt und das Objekt mit einer vorbestimmten Kraft an dem Bauteil fixiert.

Bei einer bevorzugten Weiterbildung ist die Spannvorrichtung mittels Filmscharnieren mit den beiden Bereichen des Bandes verbunden. Für die Montage liegt der Kabelbinder als einheitliches Bauteil vor, was produktionstechnische Vorteile bietet, zum Beispiel weil nur ein einziges Teil vorgehalten werden muss. Darüber hinaus ist ein einzelnes Teil für einen Werker in der Produktion einfacher zu handhaben als mehrere Teile. Durch die Scharnierfunktion der Filmscharniere ist zusätzlich eine definierte Bewegungsrichtung der einzelnen Teile vorbestimmt.

Bei einer vorteilhaften Ausführungsform weist der erste Bereich eine Rastöffnung zur Aufnahme des Rastkopfes auf und der zweite Bereich vorspringende Spannzapfen, die in jeweils eine Aufnahme der beiden Spannhaken passen.

Mit Vorteil weist der erste oder zweite Bereich des Bandes einen elastischen Abschnitt auf, der in einer Längsrichtung des Bandes dehnbar ist.

Die Spannkraft, mit der das Objekt an dem Bauteil festgehalten ist, ist im Wesentlichen durch den elastischen Abschnitt definiert, sodass Abweichungen der Einstecktiefe der Enden des Kabelbinder in die Kabelschlösser durch eine mehr oder weniger starke Dehnung des elastischen Abschnittes ausgeglichen werden. Die mehr oder weniger starke Dehnung des elastischen Abschnittes hat keine oder keine wesentliche Auswirkung auf die Spannkraft, sodass eine gleichmäßige Qualität des Herstellungsprozesses gewährleistet ist.

Die Spannhaken können auf der den Spannzapfen zugewandten Seite mit einem Rastvorsprung versehen sein. In der gespannten Stellung der Spannvorrichtung hintergreifen die Rastvorsprünge das zweite Band und sorgen dafür, dass die Spannvorrichtung auch auf dem zweiten Band verrastet und in der gespannten Stellung fixiert ist. Die Fixierung der Spannvorrichtung in der gespannten Stellung wird dadurch stabiler, als wenn nur der Rastkopf für die Fixierung sorgen würde. Durch diese formschlüssige Verbindung der einzelnen Bauteile wird die Funktion der Filmscharniere nicht mehr benötigt, was bei einer Beschädigung der Filmscharniere zum Beispiel durch Alterung oder Verhärtung vorteilhaft ist.

Bei einer zweckmäßigen Weiterbildung sind an den Rastvorsprüngen Anlaufschrägen ausgebildet. Die Anlaufschrägen sorgen dafür, dass die Spannhaken kurz bevor sie auf dem zweiten Band verrasten auseinandergedrückt werden, um das Verrasten zu erleichtern.

Der Kabelbinder ist ein einfaches Spritzgussteil, für dessen Herstellung nur einfache Werkzeuge benötigt werden.

Gemäß einem zweiten Aspekt schlägt die Erfindung eine Befestigungsgarnitur zur Befestigung von Objekten an einem Bauteil vor, die zwei Kabelbandschlösser sowie einen Kabelbinder gemäß dem ersten Aspekt der Erfindung umfasst. Die Befestigungsgarnitur stellt sämtliche Bauteile bereit, die zur Befestigung eines Objektes an einem strukturellen Bauteil zum Beispiel in einem Fahrzeug oder in einem anderen Produkt nötig sind. Mit der Befestigungsgarnitur werden alle Vorteile verwirklicht, die im Zusammenhang mit den erfindungsgemäßen Kabelbinder erläutert wurden.

Ein nicht zur Erfindung gehörendes Verfahren zur Montage eines erfindungsgemäßen Kabelbinders um ein Objekt an einem Bauteil zu befestigen umfasst:
- Einstecken und Verrasten von Kabelbandschlössern in Öffnungen in dem Bauteil;
- Einführen der Enden des Kabelbinders in jeweils eines der Kabelbandschlösser; und
- Spannen der Spannvorrichtung.

Das Einführen der Enden des Kabelbinders erfolgt so weit, bis der Kabelbinder ohne Spiel an dem Objekt anliegt. Auf diese Weise wird erreicht, dass mit der Spannvorrichtung eine ausreichende Spannkraft zur Befestigung des Objektes auf dem Bauteil erzielt wird.

In der Praxis hat es sich als zweckmäßig erwiesen, wenn das Spannen der Spannvorrichtung durch ein Verschwenken der Spannvorrichtung erfolgt.

### Kurze Beschreibung der Zeichnung

Nachfolgend wird die Erfindung anhand einer Ausführungsform unter Bezugnahme auf die begleitenden Figuren exemplarisch näher erläutert. Alle Figuren sind rein schematisch und nicht maßstäblich. Es zeigen:
- Fig. 1A, 1B: einen Kabelbinder gemäß dem Stand der Technik;
- Fig. 2A-2D: Ansichten von der Seite und von oben auf einen erfindungsgemäßen Kabelbinder;
- Fig. 3A: ein vergrößerter Ausschnitt eines erfindungsgemäßen Kabelbinders im nicht gespannten Zustand;
- Fig. 3B: eine geöffnete Spannvorrichtung des Kabelbinders aus Figur 3A;
- Fig. 4A: ein vergrößerter Ausschnitt eines erfindungsgemäßen Kabelbinders im gespannten Zustand;
- Fig. 4B: eine geschlossene Spannvorrichtung des Kabelbinders aus Figur 4A;
- Fig. 5A, 5B: Ansichten eines Kabelbinderschlosses;
- Fig. 6A: eine Montagesituation mit einem geöffneten Kabelbinder;
- Fig. 6B: eine Montagesituation mit einem geschlossenen Kabelbinder; und
- Fig. 7: schematisches Flussdiagramm für ein Verfahren zur Befestigung eines Objektes mit einem erfindungsgemäßen Kabelbinder.

Gleiche oder ähnliche Elemente sind in den Figuren mit gleichen oder ähnlichen Bezugszeichen versehen.

### Ausführungsbeispiel

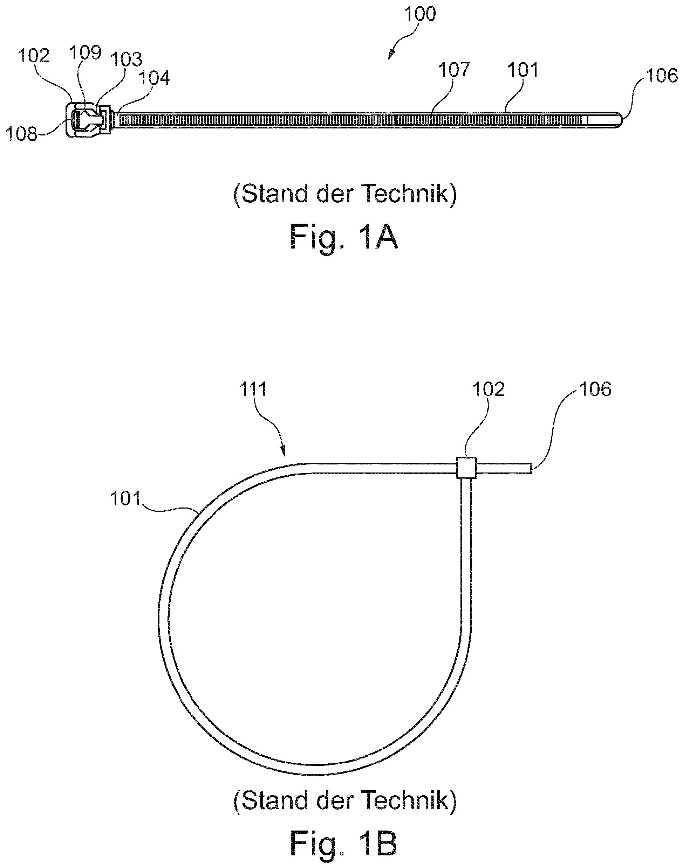

Figur 1A zeigt einen Kabelbinder wie er aus dem Stand der Technik bekannt ist. Der Kabelbinder 100 weist einen länglichen flachen Band 101 und einem Kopf 102 auf. In den Kopf 102 ist ein Fenster 103 ausgebildet, das einen Durchgang durch den Kopf 102 bereitstellt. Das längliche Band 101 weist ein erstes Ende 104 auf sowie ein gegenüberliegendes zweites Ende 106. Das erste Ende 104 ist mit dem Kopf 102 verbunden. Das Band 101 ist auf einer Hauptfläche mit einer Verzahnung 107 versehen. Das zweite Ende 106 des Bandes 101 kann durch das Fenster 103 hindurchgeführt werden. Dabei kommt die Verzahnung 107 mit einem freien Ende 108 einer Rastzunge 109 in Eingriff. Die Rastzunge 109 wirkt mit der Verzahnung 107 so zusammen, dass das zweite Ende 106 des Bandes 101 in den Kopf 102 einsteckbar ist, aber nicht mehr herausgezogen werden kann, wie es eingangs beschrieben wurde. Auf diese Weise kann der Kabelbinder 100 wie eine Schlaufe um ein Bauteil und ein daran zu befestigendes Objekt gelegt werden oder kann mehrere elektrische Leitungen und/oder Fluidleitungen (alle nicht dargestellt) zu einem Bündel vereinigen. Hierfür ist es erforderlich, dass der Kabelbinder 100 um die zu vereinigenden Gegenstände herumgeführt wird, was in manchen Einbausituationen Schwierigkeiten bereiten kann.

Figur 1B veranschaulicht eine Schlaufe, die der Kabelbinder 100 bildet, wenn das zweite Ende 106 in den Kopf 102 eingesteckt ist.

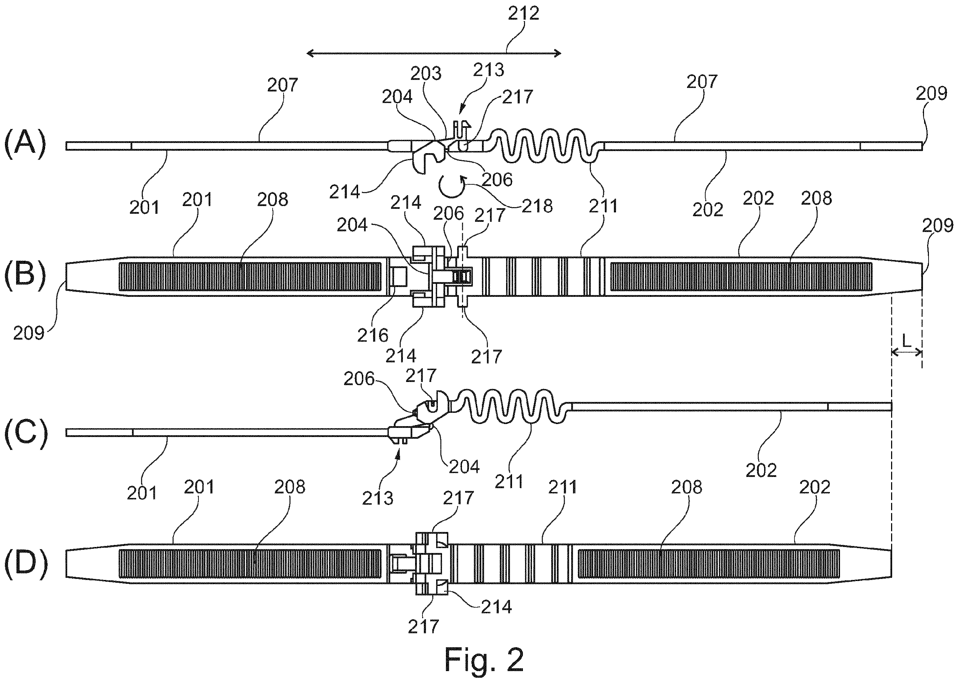

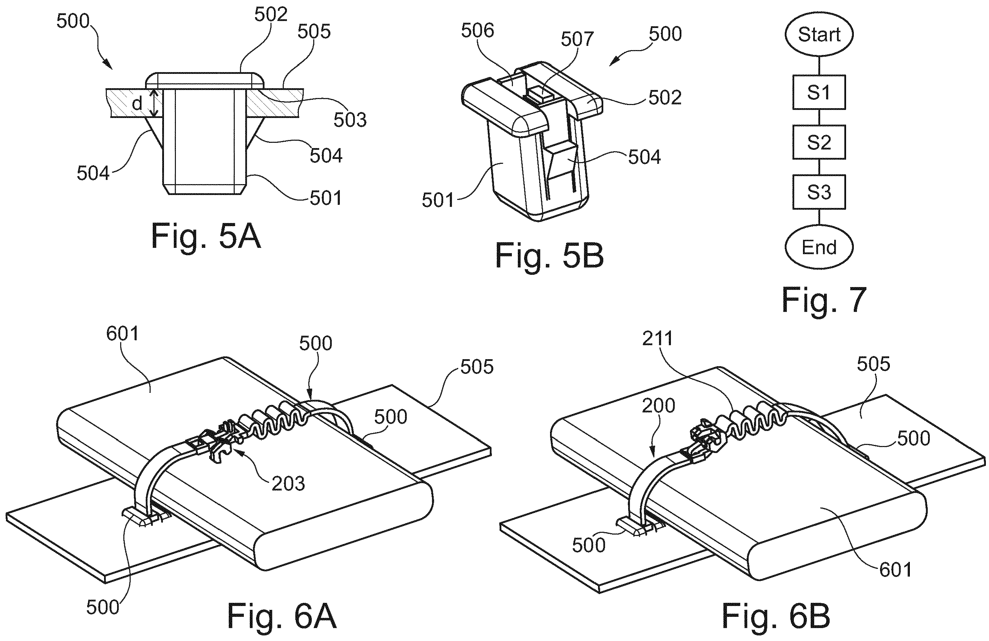

Die Figuren 2A und 2B zeigen einen erfindungsgemäßen Kabelbinder 200 in einer Ansicht von der Seite und in einer Draufsicht von oben. Der Kabelbinder 200 umfasst zwei Kabelbänder 201,202, die mittels einer Spannvorrichtung 203 miteinander verbunden sind. Die Kabelbänder werden im Folgenden kurz nur "Band" genannt. Das erste Band 201 ist mit der Spannvorrichtung 203 mittels eines Filmscharniers 204 und das zweite Band mit 202 mit der Spannvorrichtung 203 mittels eines Filmscharniers 206 verbunden. Das erste und das zweite Band 201,202 sind eingangs auch als erster und zweiter Bereich eines einheitlichen Kabelbandes bezeichnet worden. Die Bänder 201,202 weisen auf einer Hauptfläche 207 jeweils eine Verzahnung 208 auf. Die Enden 209 der Bänder 201,202 verjüngen sich und erleichtern dadurch das Einstecken in ein Kabelbandschloss 500 (Figur 5A). Das zweite Band 202 weist weiterhin einen gewellten Abschnitt 211 auf, der in einer Längsrichtung 212 des Kabelbinders 200 elastisch dehnbar ist. Der Kabelbinder 200 ist in den Figuren 2A und 2B in einen ungespannten Zustand dargestellt.

Die Spannvorrichtung 203 weist einen Rastkopf 213 sowie zwei Spannhaken 214 auf. In einem gespannten Zustand des Kabelbinders 203 wirkt der Rastkopf 213 mit einer Rastöffnung 216 im ersten Band 201 und die Spannhaken 214 mit Spannzapfen 217 zusammen, die an dem zweiten Band 202 angeordnet sind. Zum Spannen des Kabelbinders wird die Spannvorrichtung 203 gegen den Uhrzeigersinn verschwenkt, wie es mit Pfeil 218 in Figur 2A angedeutet ist.

Die Figuren 2C und 2D stellen den Kabelbinder 200 in einem gespannten Zustand mit geschlossener Spannvorrichtung 203 dar. Im gespannten Zustand ist der Kabelbinder 200 im Vergleich zu den in den Figuren 2A und 2B gezeigten ungespannten Zustand um eine Länge L verkürzt. Im Einbauzustand des Kabelbinders 200, wenn die Bänder 201,202 jeweils in einem Kabelschloss verriegelt sind, wird die Verkürzung des Kabelbinders 200 um die Länge L durch eine entsprechende Dehnung des elastischen Abschnittes 211 ausgeglichen.

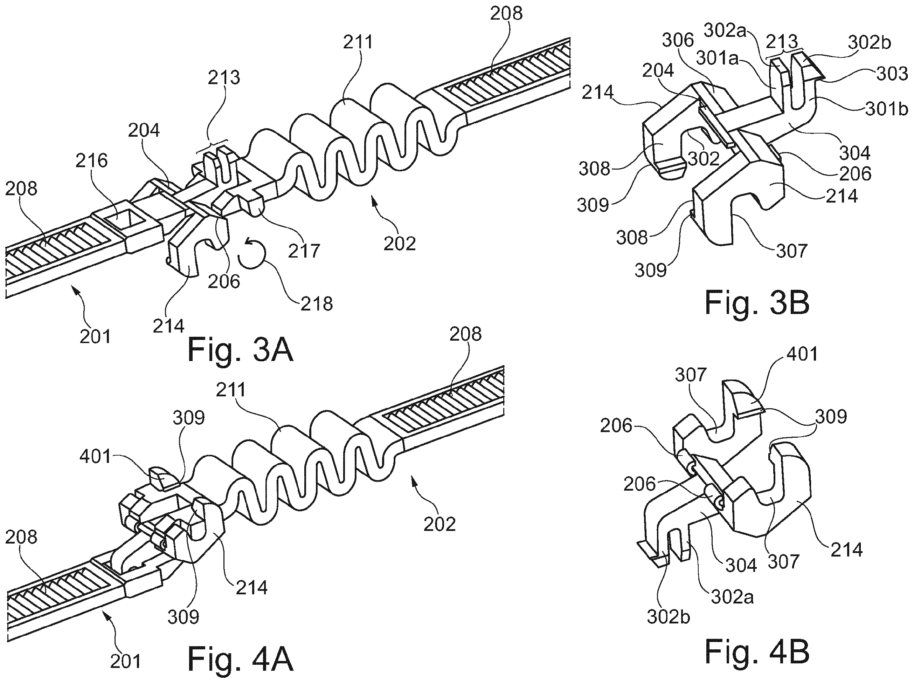

Figur 3A zeigt eine perspektivische und vergrößerte Ansicht eines Ausschnittes aus Figur 2A mit offener Spannvorrichtung 203. Figur 3B zeigt die offene Spannvorrichtung 203 als einzelnes Bauteil. Der Rastkopf 213 ist aus zwei federnden Laschen 301a,301b aufgebaut, deren freie Enden 302a,302b angefast sind, damit der Rastkopf 213 leichter in die Öffnung 216 findet (Figur 2C). An der federnden Lasche 301b ist ein Rastvorsprung 303 ausgebildet, der bei gespannter Spannvorrichtung 203, d.h. wenn der Rastkopf 213 in der Öffnung 216 sitzt (Figur 2C), eine Unterseite des ersten Bandes 201 hintergreift, sodass der Rastkopf 213 nicht mehr ohne weiteres aus der Öffnung 216 lösbar ist. Der Rastkopf 213 ist an einem Ende eines Steges 304 angeordnet, der an seinem anderen Ende eine Traverse 306 trägt, an deren Enden die beiden Spannhaken 214 angeordnet sind. Die Spannhaken 214 weisen jeweils eine Aufnahme 307 auf, die so bemessen sind, dass die Spannzapfen 217 hineinpassen. An den innenliegenden Seiten 308 der Spannhaken 214 sind Vorsprünge 309 ausgebildet, deren Funktion mit Bezug auf die Figuren 4A und 4B nachfolgend beschrieben wird. Damit die Vorsprünge 309 nicht an den erste Band 201 verhaken, ist ein Endbereich des ersten Bandes schmaler ausgebildet. Schließlich sind in den Figuren 3A und 3B Teile der Filmscharniere 204,206 sichtbar, um welche die Spannvorrichtung 203 zum Spannen verschwenkbar ist. Die Schwenkbewegung zum Spannen der Spannvorrichtung 203 erfolgt gegen den Uhrzeigersinn wie es mit dem Pfeil 218 (Figur 2A) angedeutet ist.

In Figur 4A ist die Spannvorrichtung 203 gespannt und der Kabelbinder 200 in einem gespannten Zustand dargestellt, der durch das Verschwenken der Spannvorrichtung 203 gegen den Uhrzeigersinn erreicht wird. Am Ende der Schwenkbewegung der Spannvorrichtung 203 sitzt der Rastkopf 213 in der Öffnung 216 und die Spannzapfen 217 sind in den Aufnahmen 307 der Spannhaken 214 aufgenommen. Wie in Figur 4A erkennbar ist, hintergreifen die Vorsprünge 309 bei gespannter Spannvorrichtung 203 eine Unterseite des Kabelbandes 202, wodurch die Spannvorrichtung 203 auf dem zweiten Kabelband 202 einrastet. Um das Einrasten der Spannvorrichtung 203 zu erleichtern sind die Vorsprünge 309 jeweils mit einer Anlaufschräge 401 versehen, die dafür sorgen, dass die Spannhaken 214 von den schmalen Seiten des Kabelbandes 202 jeweils nach außen gedrängt werden und dann zurückschnappen, wenn die Vorsprünge 309 das Kabelband 202 passiert haben.

Um ein Objekt mit dem Kabelbinder 200 an einem Bauteil zu befestigen, werden die freien Enden 209 des Kabelbinders 200 an dem Bauteil mit Kabelbandschlössern fixiert, wie nachfolgenden mit Bezug auf die Figuren 6A und 6B erläutert wird.

Die Figuren 5A, 5B zeigen ein Kabelbandschloss 500 in einer Ansicht von der Seite und in einer perspektivischen Ansicht. Das Kabelbandschloss 500 weist einen Einsteckzapfen 501 mit einem rechteckigen Querschnitt auf, der an einem oberen Ende eine Auflageplatte 502 trägt. Die Auflageplatte 502 steht allseitig über den Umfang des Einsteckzapfens 501 über, sodass ein Auflageflansch 503 entsteht. Mit einem Abstand d von der Auflageplatte 502 sind an den Einsteckzapfen Rasthaken 504 ausgebildet. Der Abstand d entspricht ungefähr einer Wandstärke eines Bauteils 505, in welches das Kabelbandschloss 500 montiert werden soll. Durch den Einsteckzapfen 501 und die Auflageplatte 502 führt ein Kanal 506, in welchem ein Kabelband 200 einsteckbar ist. In dem Kanal 506 ist eine Rastzunge 507 angeordnet, die mit der Verzahnung 208 an dem Kabelband 200 so in Eingriff kommt, dass das Kabelband in das Kabelbandschloss 500 einsteckbar ist, aber nicht mehr herausgezogen werden kann.

Bei anderen Ausführungsbeispielen des Kabelbandschlosses 500 ist der Querschnitt des Einsteckzapfens 501 und oder hat weniger oder mehr als vier Ecken. Weiterhin sind bei anderen Ausführungsbeispielen des Kabelbandschlosses mehr oder weniger als zwei Rasthaken 504 vorgesehen. Die Figuren 6A und 6B zeigen eine konkrete Einbausituation, wobei in Figur 6A der Kabelbinder 200 nicht gespannt ist, während er in der Darstellung Kurs 6B gespannt ist. Die Figuren 6A, 6B illustrieren, wie ein Kabelbaum 601 mit einem Kabelbinder 200 auf dem Bauteil 505 befestigt ist. In dem Bauteil 505 sind zwei Kabelbandschlösser in dafür vorgesehene Öffnungen in dem Bauteil 505 montiert.

Das Kabelbandschloss kann auch ein integrierter Bestandteil eines Kabelkanals sein, ein Montageprozess dieses Schlosses kann dadurch eingespart werden.

Das Verfahren zur Befestigung des Kabelbaums 601 an dem Bauteil 505 ist in Figur 7 als Flussdiagramm veranschaulicht. In einem ersten Schritt S1 werden Kabelbandschlösser 500 in passende Öffnungen in dem Bauteil 505 eingesteckt und verrastet. In einem nächsten Schritt S2 werden die Enden des Kabelbinders 200 in jeweils eines der Kabelbandschlösser 500 eingeführt bis der Kabelbinder 200 ohne Spiel an dem Kabelbaum 601 anliegt. Schließlich wird in einem Schritt S3 die Spannvorrichtung 203 an dem Kabelbinder 200 durch Verschwenken gespannt.

Auf diese Weise wird mit dem Kabelbinder 200 der Kabelbaum 601 an dem Bauteil 505 befestigt, ohne dass es hierfür erforderlich wäre, den Kabelbinder in einer Schlaufe sowohl um den Kabelbaum 601 als auch das Bauteil 505 herum zu führen. In Einbausituationen, wo Werkern wenig Platz zur Verfügung steht, stellt das einen erheblichen Vorteil dar. Weiterhin sorgt der elastische Abschnitt 211 dafür, dass der Kabelbaum stets mit einer gleichmäßigen Spannung an dem Bauteil befestigt ist, weil die in dem Kabelbinder 200 herrschende Zugkraft als Funktion der Dehnung des gewählten Abschnittes 211 im Wesentlichen konstant ist. Es ist daher für eine gleichmäßige Fertigungsqualität nicht unbedingt erforderlich, dass die Werker den Kabelbinder 200 stets mit derselben Vorspannung in die Kabelbandschlösser 500 einführen.

Hergestellt werden die Kabelbinder in einem Spritzgussverfahren. Dazu wird in der Regel granulatförmiges Rohmaterial auf eine vorgegebene Temperatur erwärmt und verflüssigt. Anschließend wird das geschmolzene Material mit hohem Druck in eine Spritzgussform gepresst.

In den Ansprüchen schließen die Wörter "aufweisen" und "umfassen" nicht andere Elemente oder Schritte aus und der unbestimmte Artikel "ein" schließt eine Mehrzahl nicht aus.

## Patentansprüche

1. Kabelbinder mit einem Band (201,202) und einer in dem Band integrierten Spannvorrichtung (203), die das Band in einen ersten und einen zweiten Bereich teilt, die jeweils einen verzahnten Abschnitt (208) aufweisen, wobei die Spannvorrichtung (203) verschwenkbar ausgebildet ist und einen Rastkopf (213) und zwei Spannhaken (214) umfasst, **dadurch gekennzeichnet, dass** der Rastkopf zwei federnde Laschen (301a,301b) umfasst, von denen eine mit einem Rastvorsprung (303) versehen ist.

2. Kabelbinder nach Anspruch 1, **dadurch gekennzeichnet, dass** die Spannvorrichtung (213) mittels Filmscharnieren (204,206) mit den beiden Bereichen (201,202) des Bandes verbunden ist.

3. Kabelbinder nach Anspruch 1 oder 2, **dadurch gekennzeichnet, dass** der erste Bereich (201) eine Rastöffnung (216) zur Aufnahme des Rastkopfes (213) aufweist und der zweite Bereich (202) vorspringende Spannzapfen (217), die in jeweils eine Aufnahme (307) der beiden Spannhaken (214) passen.

4. Kabelbinder nach einem der vorstehenden Ansprüche, **dadurch gekennzeichnet, dass** der erste oder zweite Bereich (201,202) des Bandes einen elastischen Abschnitt (211) aufweist, der in einer Längsrichtung des Bandes dehnbar ist.

5. Kabelbinder nach einem der vorstehenden Ansprüche, **dadurch gekennzeichnet, dass** die Spannhaken (214) auf der den Spannzapfen (217) zugewanderten Seite mit einem Rastvorsprung (309) versehen sind.

6. Kabelbinder nach Anspruch 5, **dadurch gekennzeichnet, dass** an den Rastvorsprüngen (309) Anlaufschrägen (401) ausgebildet sind.

7. Befestigungsgarnitur zur Befestigung von Objekten an einem Bauteil, die zwei Kabelbandschlösser (500) sowie einen Kabelbinder (200) nach einem der vorstehenden Ansprüche umfasst.

## Claims

1. Cable tie having a band (201, 202) and having a tensioning device (203) which is integrated in the band and which divides the band into a first and a second region, each of which regions has a toothed portion (208), wherein the tensioning device (203) is designed to be pivotable and comprises a latching head (213) and two tensioning hooks (214), **characterized in that** the latching head comprises two resilient tabs (301a, 301b), one of which is provided with a latching projection (303).

2. Cable tie according to Claim 1, **characterized in that** the tensioning device (213) is connected to the two regions (201, 202) of the band by means of film hinges (204, 206) .

3. Cable tie according to Claim 1 or 2, **characterized in that** the first region (201) has a latching opening (216) for receiving the latching head (213), and the second region (202) has projecting tensioning pegs (217) which fit into in each case one receiving part (307) of the two tensioning hooks (214).

4. Cable tie according to one of the preceding claims, **characterized in that** the first or second region (201, 202) of the band has an elastic portion (211) which can be extended in a longitudinal direction of the band.

5. Cable tie according to one of the preceding claims, **characterized in that** the tensioning hooks (214) are provided on the side facing towards the tensioning pegs (217) with a latching projection (309).

6. Cable tie according to Claim 5, **characterized in that** run-on bevels (401) are formed on the latching projections (309).

7. Fastening set for fastening objects to a component, comprising two cable-band locks (500) and a cable tie (200) according to one of the preceding claims.

## Revendications

1. Attache de câble comprenant une bande (201, 202) et un dispositif de serrage (203) intégré dans la bande, qui divise la bande en une première et une deuxième zone présentant chacune une partie dentée (208), le dispositif de serrage (203) étant pivotant et comprenant une tête d'encliquetage (213) et deux crochets de serrage (214), **caractérisé en ce que** la tête d'encliquetage comprend deux languettes élastiques (301a, 301b) dont l'une est pourvue d'une saillie d'encliquetage (303).

2. Attache de câble selon la revendication 1, **caractérisée en ce que** le dispositif de serrage (213) est relié aux deux zones (201, 202) de la bande par des charnières-film (204, 206).

3. Attache de câble selon la revendication 1 ou la revendication 2, **caractérisée en ce que** la première zone (201) présente une ouverture d'encliquetage (216) destinée à recevoir la tête d'encliquetage (213) et la deuxième zone (202) présente des tenons de serrage saillants (217) qui s'adaptent chacun dans un logement (307) des deux crochets de serrage (214).

4. Attache de câble selon l'une des revendications précédentes, **caractérisée en ce que** la première ou la deuxième zones (201, 202) de la bande présente une partie élastique (211) qui est extensible dans le sens longitudinal de la bande.

5. Attache de câble selon l'une des revendications précédentes, **caractérisée en ce que** les crochets de serrage (214) sont pourvus d'une saillie d'encliquetage (309) sur le côté tourné vers les tenons de serrage (217).

6. Attache de câble selon la revendication 5, **caractérisée en ce que** des chanfreins (401) sont formés sur les saillies d'encliquetage (309).

7. Ensemble de fixation pour attacher des objets à un élément de construction, comprenant deux verrous (500) pour bande à câble ainsi qu'une attache de câble (200) selon l'une des revendications précédentes.
